# EUROPÄISCHE PATENTANMELDUNG

(11) **EP 4 821 793 A1**
(43) Veröffentlichungstag der Anmeldung: **14.10.2026**
(21) Anmeldenummer: 26168477.3
(22) Anmeldetag: 27.03.2026
(51) Int. Cl.: B62D 5/04

(54) **LENKSYSTEMANWENDUNGSSPEZIFISCHE INTEGRIERTE SCHALTUNG UND DEREN BETRIEB SOWIE LENKSYSTEMSTEUERUNGSEINHEIT UND LENKSYSTEM MIT EINER SOLCHEN SCHALTUNG**

(30) Priorität: 11.04.2025 BE 202505239
(71) Anmelder: thyssenkrupp Presta AG, 9492 Eschen (LI); thyssenkrupp AG, 45143 Essen (DE)
(72) Erfinder: Narayanan, Shyam, 9494 Schaan (LI); Balogh, András, 8000 Székesfehérvár (HU); Tibori, Tamás Tibold, 1083 Budapest (HU); Junger, Ferenc, Troy (MI), 48098 (US)
(74) Vertreter: thyssenkrupp Intellectual Property GmbH

(57) **Zusammenfassung**

Die vorliegende Erfindung betrifft eine lenksystemanwendungsspezifische integrierte Schaltung (1), die einen mehrere Funktionsblöcke aufweisenden Hauptblock (2), eine Gate-Treiber-Einheit (3), wenigstens eine Schnittstelle (4) und wenigstens einen AD-Wandler (53) umfasst. Der Hauptblock (2) umfasst als Funktionsblöcke eine Lenksystemmotor-Steuerung (21), eine Aktuatormanagement-Einheit (22), eine Systemdiagnoseeinheit (23) und eine Energiemanagement-Steuerung (24), wobei die Lenksystemmotor-Steuerung (21) eingerichtet ist, einen Betrieb eines Lenksystemmotors (101) zu regeln, wobei der wenigstens eine AD-Wandler 53 eingerichtet ist, der Lenksystemmotor-Steuerung (21) für die Regelung digitalisierte Sensorsignale bereitzustellen, die Aktuatormanagement-Einheit (22) dazu eingerichtet ist, im Betrieb der lenksystemanwendungsspezifischen integrierten Schaltung (1) das Lenksystem zu überwachen und ein Abschalten des Lenksystemmotors auszulösen, die Systemdiagnoseeinheit (23) dazu eingerichtet ist, die Funktionsfähigkeit der Funktionsblöcke und/oder weiterer Komponenten einer Lenksystemsteuerungseinheit (10) zu überwachen, und die Energiemanagement-Steuerung (24) dazu eingerichtet ist, geforderte Spannungen in unterschiedlichen Spannungsbereichen bereitzustellen.

Ferner betrifft die Erfindung eine Lenksystemsteuerungseinheit (10) mit einer vorstehend genannten lenksystemanwendungsspezifischen integrierten Schaltung, ein elektromechanisches Lenksystem mit der Lenksystemsteuerungseinheit (10) und ein Verfahren zum Betreiben der lenksystemanwendungsspezifischen integrierten Schaltung (1).

## Beschreibung

Die Erfindung betrifft eine lenksystemanwendungsspezifische integrierte Schaltung sowie eine Lenksystemsteuerungseinheit mit einer lenksystemanwendungsspezifischen integrierten Schaltung und ein Lenksystem umfassend eine Lenksystemsteuerungseinheit mit einer lenksystemanwendungsspezifischen integrierten Schaltung.

Ein elektromechanisches Lenksystem von aktuellen Kraftfahrzeugen, insbesondere PKWs (PKW: Personenkraftwagen), umfasst eine komplexe Lenksystemsteuerungseinheit für die Steuerung des Elektromotors oder der Elektromotoren, den beziehungsweise die das Lenksystem für die Umsetzung einer Lenkvorgabe in eine entsprechende Lenkbewegung von lenkbaren Rädern des Kraftfahrzeugs aufweist. Ein Lenksystem mit einer Lenksystemsteuerungseinheit ist beispielsweise aus der WO 2021/198471 A1 bekannt.

Eine Lenksystemsteuerungseinheit eines Lenksystems für Kraftfahrzeuge umfasst derzeit regelmäßig verschiedene Elemente, um einen Elektromotor anzusteuern, dessen Betrieb zu regeln und dessen Betrieb zu überwachen. Typischerweise ist eine Lenksystemsteuerungseinheit als elektronische Steuereinheit (ECU; ECU: Electronic Control Unit) mit einem dedizierten Energiemanagement-Chip (PMIC; PMIC: Power Management Integrated Circuit) oder einem System Basis Chip (SBC) ausgebildet, wobei der PMIC beziehungsweise der SBC verschiedene Stromversorgungsbereiche der Lenksystemsteuerungseinheit reguliert und überwacht. Ein Gate-Treiber-Chip (GDU; GDU: Gate Driver Unit) empfängt dabei Steuersignale und erzeugt Ansteuersignale für externe Transistoren, insbesondere MOSFETs (MOSFET: Metal-Oxide-Semiconductor Field-Effect Transistor), die in der Regel zu einer Brückenschaltung miteinander verschaltet sind und über die der Elektromotor letztendlich angetrieben wird.

Die gesamte Lenksystemsteuerungseinheit wird dabei typischerweise von einem dedizierten Mikrocontroller (MCU; MCU: Micro Controller Unit) gesteuert, auf dem zwei Softwareschichten mit mehreren Software-Komponenten ausgeführt werden. Die Software-Komponenten können grob in niedrigere und höhere Softwareebenen unterteilt werden, wobei die niedrigere Softwareebene hauptsächlich für die Hardwaresteuerung, die Motorregelung sowie Diagnose- und Sicherheitsfunktionen verantwortlich ist, wohingegen die höhere Softwareebene anwendungsbezogene Funktionen übernimmt.

Aus der EP 3 676 158 B1 ist darüber hinaus eine elektrische Motorsteuereinheit bekannt, die eine anwendungsspezifische integrierte Schaltung (ASIC; ASIC: Application-Specific Integrated Circuit) umfasst. Die anwendungsspezifische integrierte Schaltung führt dabei die Funktionen der niedrigen Softwareebene (Basissoftware-Schicht) als Hardware-Implementierung aus. Dies ermöglicht eine hochgeschwindigkeitsfähige Motorsteuerung und zudem eine Verbesserung der NVH-Leistung (NVH: Noise, Vibration, Harshness) des Systems. Die Motorsteuereinheit gemäß der EP 3 676 158 B1 benötigt dabei weiterhin einen dedizierten Energiemanagement-Chip, eine externe Gate-Treiber-Einheit sowie eine externe MCU, um Funktionen der höhere Softwareebene auszuführen.

Vor diesem Hintergrund ist es eine Aufgabe der vorliegenden Erfindung, eine verbesserte Lenksystemsteuerungseinheit sowie ein verbessertes Lenksystem bereitzustellen.

Vorteilhafterweise wird die Anzahl der separaten Hardware-Komponenten der Lenksystemsteuerungseinheit dabei reduziert. Weiter vorteilhaft können Performance-Anforderungen an eine MCU der Lenksystemsteuerungseinheit reduziert werden.

Zur Lösung dieser Aufgabe werden eine lenksystemanwendungsspezifische integrierte Schaltung gemäß Anspruch 1 sowie eine Lenksystemsteuerungseinheit, ein Lenksystem und ein Verfahren zum Betreiben einer lenksystemanwendungsspezifischen integrierten Schaltung gemäß den nebengeordneten Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine lenksystemanwendungsspezifische integrierte Schaltung vor, die einen mehrere Funktionsblöcke aufweisenden Hauptblock, wenigstens eine Gate-Treiber-Einheit, insbesondere mehrere Gate-Treiber-Einheiten, weiter insbesondere eine Gate-Treiber-Einheit und eine Relais-Treiber-Einheit, wenigstens eine Schnittstelle und wenigstens einen AD-Wandler (AD: Analog-Digital) mit mehreren Eingängen umfasst, wobei die Schnittstelle insbesondere zum Austausch von Daten mit externen Einheiten, also mit außerhalb der lenksystemanwendungsspezifischen integrierten Schaltung befindlichen Einheiten, ausgebildet ist. Der Hauptblock der lenksystemanwendungsspezifischen integrierten Schaltung umfasst als Funktionsblock eine Lenksystemmotor-Steuerung, eine Aktuatormanagement-Einheit, eine Systemdiagnoseeinheit und eine Energiemanagement-Steuerung, die auch als Leistungsmanagement-Steuerung bezeichnet werden kann. Die Lenksystemmotor-Steuerung ist dabei eingerichtet, im Betrieb der lenksystemanwendungsspezifischen integrierten Schaltung den Betrieb eines Lenksystemmotors zu regeln, wobei der wenigstens eine AD-Wandler eingerichtet ist, im Betrieb der lenksystemanwendungsspezifischen integrierten Schaltung der Lenksystemmotor-Steuerung für das Regeln eines Betriebs eines Lenksystemmotors digitalisierte Sensorsignale bereitzustellen, wobei die Sensorsignale insbesondere von externen Sensoren, die insbesondere nicht von der lenksystemanwendungsspezifischen integrierten Schaltung umfasst sind, stammen. Die Aktuatormanagement-Einheit ist vorteilhafterweise dazu eingerichtet, im Betrieb der lenksystemanwendungsspezifischen integrierten Schaltung das Lenksystem, insbesondere eine bestimmungsgemäße Funktion des Lenksystems, zu überwachen und ein Abschalten des Lenksystemmotors auszulösen. Die Systemdiagnoseeinheit ist dazu eingerichtet, im Betrieb der lenksystemanwendungsspezifischen integrierten Schaltung die Funktionsfähigkeit der Funktionsblöcke und/oder weiterer Komponenten einer Lenksystemsteuerungseinheit zu überwachen. Die Energiemanagement-Steuerung ist dazu eingerichtet, im Betrieb der lenksystemanwendungsspezifischen integrierten Schaltung geforderte Spannungen in unterschiedlichen Spannungsbereichen bereitzustellen. Die Energiemanagement-Steuerung ist somit insbesondere eine Energieversorgungseinheit. Insbesondere ist die Aktuatormanagement-Einheit ausgebildet zu überwachen, wie das System läuft. Vorteilhafterweise entscheidet die Aktuatormanagement-Einheit dabei auf Grundlage verschiedener Eingangssignale, insbesondere auf Grundlage von von der Systemdiagnoseeinheit empfangenen Eingangssignalen, ob der Lenksystemmotor abgeschaltet werden muss. Die Aktuatormanagement-Einheit kann insbesondere einerseits einen EIN-Zustand und andererseits einen AUS-Zustand annehmen und schaltet auf diese Weise vorteilhafterweise die Gate-Treiber-Einheit und Phasenrelais ein beziehungsweise aus. Ein Betrieb der lenksystemanwendungsspezifischen integrierten Schaltung ist dabei insbesondere auch ein Betrieb der lenksystemanwendungsspezifischen integrierten Schaltung in einer Lenksystemsteuerungseinheit eines elektromechanischen Lenksystems eines Kraftfahrzeugs bei Nutzung des Kraftfahrzeugs.

Die Gate-Treiber-Einheit der lenksystemanwendungsspezifischen integrierten Schaltung ersetzt vorteilhafterweise wenigstens einen externen Chip mit einer Gate-Treiber-Einheit. Insbesondere ist eine Gate-Treiber-Einheit und eine Relais-Treiber-Einheit als die wenigstens eine Gate-Treiber-Einheit vorgesehen. Vorteilhafterweise ersetzen die Gate-Treiber-Einheit und die Relais-Treiber-Einheit der lenksystemanwendungsspezifischen integrierten Schaltung zwei externe Chips mit entsprechenden Einheiten, die insbesondere erforderlich sind, um Transistoren, insbesondere MOSFETs, einer dem Lenksystemmotor zugeordneten Brückenschaltung, sowie andere für die Sicherheit und den Schutz des Systems verwendete Schalter und/oder Relais, insbesondere MOSFET-Schalter und/oder Relais, zu steuern. Dadurch wird vorteilhafterweise die Anzahl der separaten Hardware-Komponenten, die für eine Lenksystemsteuerungseinheit erforderlich sind, reduziert. Zudem ersetzt die Energiemanagement-Steuerung vorteilhafterweise einen externen Chip mit einer Energiemanagement-Steuerung, insbesondere einen PMIC. Vorteilhafterweise wird so die Anzahl der separaten Hardware-Komponenten, die für eine Lenksystemsteuerungseinheit erforderlich sind, weiter reduziert.

Weiter vorteilhaft ist vorgesehen, dass die lenksystemanwendungsspezifische integrierte Schaltung weiter eingerichtet ist, sicher mit anderen Recheneinheiten zu kommunizieren, insbesondere mit anderen Recheneinheiten innerhalb einer Lenksystemsteuerungseinheit, von der die lenksystemanwendungsspezifische integrierte Schaltung umfasst ist, und/oder mit Einheiten außerhalb der Lenksystemsteuerungseinheit. Vorteilhafterweise unterstützt die lenksystemanwendungsspezifische integrierte Schaltung wenigstens eines der nachfolgend angeführten Kommunikationsprotokolle: CAN (CAN: Controller Area Network); FlexRay; Ethernet. Vorteilhafterweise ist so eine direkte Kommunikation ermöglicht, wodurch eine höhere Bearbeitungsgeschwindigkeit ermöglicht wird.

Des Weiteren ist insbesondere vorgesehen, dass die Lenksystemmotor-Steuerung weiter dazu eingerichtet ist, im Betrieb der lenksystemanwendungsspezifischen integrierten Schaltung eine Leistung eines Lenksystemmotors durch Erzeugung von pulsweitenmodulierten Phasenspannungen zu steuern, insbesondere unter Berücksichtigung von an den Eingängen des wenigstens einen AD-Wandlers anliegenden und von dem wenigstens einen AD-Wandler umgewandelten Signalen.

Gemäß einer vorteilhaften Ausgestaltung umfasst die wenigstens eine Schnittstelle der lenksystemanwendungsspezifischen integrierten Schaltung wenigstens eine Sensorschnittstelle. Diese ist vorteilhafterweise dazu eingerichtet, Signale von Lenksystem-Sensoren zu empfangen und insbesondere zur Nutzung durch den Hauptblock der lenksystemanwendungsspezifischen integrierten Schaltung bereitzustellen. Als Schnittstellen der lenksystemanwendungsspezifischen integrierten Schaltung sind insbesondere sogenannte GPIO-Ports (GPIO: General Purpose Input/Output) vorgesehen, wobei vorteilhafterweise jeder Pin der Ports als Eingang oder Ausgang programmiert werden kann. Durch die Schnittstellen der lenksystemanwendungsspezifischen integrierten Schaltung ist so vorteilhafterweise eine direkte Verarbeitung von bereitgestellten Sensorinformationen ermöglicht, was die Performance vorteilhafterweise weiter verbessert.

Eine weitere vorteilhafte Ausgestaltung sieht vor, dass die wenigstens eine Schnittstelle eine Peripherieschnittstelle, insbesondere eine serielle Peripherieschnittstelle, zum Austausch von Signalen mit einer Mikrocontrollereinheit umfasst. Diese Mikrocontrollereinheit kann insbesondere zusammen mit der lenksystemanwendungsspezifischen integrierten Schaltung von einer Lenksystemsteuerungseinheit umfasst sein. Die Mikrocontrollereinheit kann aber insbesondere auch eine außerhalb der Lenksystemsteuerungseinheit angeordnete externe Mikrocontrollereinheit sein, insbesondere eine einem Aktuator eines Lenksystems zugeordnete Mikrocontrollereinheit.

Vorteilhafterweise umfasst die lenksystemanwendungsspezifische integrierte Schaltung des Weiteren einen DC-DC-Wandler (DC: Direct Current), der insbesondere eingerichtet ist, ein Lenksystem aus einem von einem Kraftfahrzeug beziehungsweise einer Kraftfahrzeugbatterie bereitgestellten Stromversorgungsbereich, insbesondere einem12V- oder 48V-Energieversorgungsbereich (V: Volt), zu speisen. Der DC-DC-Wandler kann insbesondere ein induktiver DC-DC-Wandler sein, insbesondere ein Abwärtswandler, ein Buck-Boost-Wandler, ein kapazitiver Schaltregler oder eine Abwärtsladungspumpe mit einem festlegbaren Verhältnis, wobei die Abwärtsladungspumpe insbesondere einen kleineren Abwärtswandler oder einen linearen Regler antreibt, um die Versorgungsspannung weiter auf die primäre analoge Versorgungsschiene des Systems zu reduzieren.

Die lenksystemanwendungsspezifische integrierte Schaltung ist vorteilhafterweise weiter so ausgebildet, dass diese Signale von dem wenigstens einen AD-Wandler und/oder von mehreren AD-Wandler-Kanälen im Falle eines Zeitmultiplex-AD-Wandlers auslesen kann. Insbesondere ist der wenigstens eine AD-Wandler als Zeitmultiplex-AD-Wandler mit unterschiedlichen AD-Wandler-Kanälen ausgebildet. Insbesondere sind dedizierte AD-Wandler für jeden Sensor vorgesehen. Digitale Sensoren können vorteilhafterweise über GPIO-Ports der lenksystemanwendungsspezifischen integrierten Schaltung ausgelesen werden. Vorteilhafterweise ist die lenksystemanwendungsspezifische integrierte Schaltung auf diese Weise besonders vielseitig.

Eine weitere vorteilhafte Ausgestaltung sieht vor, dass die lenksystemanwendungsspezifische integrierte Schaltung eine Prozessorarchitektur aufweist, die auf dem RISC-Prinzip (RISC: Reduced Instruction Set Computing) basiert. Die Prozessorarchitektur umfasst vorteilhafterweise einen ARM-Prozessor (ARM: Advanced RISC Machine) oder einen RISC-V-Prozessor, auch als RISC-V core bezeichnet. Insbesondere wird der ARM-Prozessor beziehungsweise der RISC-V-Prozessor für eine Umsetzung von Funktionen der Funktionsblöcke genutzt. Gemäß einer Ausgestaltungsvariante ist vorgesehen, dass die lenksystemanwendungsspezifische integrierte Schaltung die Logik mit fest verdrahteter benutzerdefinierter Logik als ASIC-Implementierung umsetzt.

Weiter vorteilhaft ist die Gate-Treiber-Einheit der lenksystemanwendungsspezifischen integrierten Schaltung ausgebildet, direkt mit einem Stromversorgungsbereich einer Fahrzeugbatterie verbunden zu werden, insbesondere mit einem 12V oder 48V basierten Stromversorgungsbereich einer Fahrzeugbatterie. Bei einer Anwendung der lenksystemanwendungsspezifischen integrierten Schaltung in einer Lenksystemsteuerungseinheit eines Kraftfahrzeuglenksystems in einem Kraftfahrzeug ist die Gate-Treiber-Einheit somit vorteilhafterweise direkt mit dem Stromversorgungsbereich der Fahrzeugbatterie verbunden, was die Hardwarekomplexität vorteilhafterweise weiter reduziert. Die Gate-Treiber-Einheit ist vorteilhafterweise weiter dazu eingerichtet, Ansteuersignale für externe MOSFETs, über die eine Lenksystemmotoransteuerung erfolgt, zu erzeugen. Die Gate-Treiber-Einheit, insbesondere High-Side/Low-Side-Treiber der Gate-Treiber-Einheit, können vorteilhafterweise eine Ladungspumpe aufweisen. Mittels der Ladungspumpe können dabei vorteilhafterweise die Ansteuersignale auf die richtigen Pegel verschoben werden.

Die lenksystemanwendungsspezifische integrierte Schaltung weist gemäß einer weiteren vorteilhaften Ausgestaltung eine Mehrzahl von Niederspannungsreglern auf, insbesondere eine Anzahl N von Niederspannungsreglern LDO-1 bis LDO-N (LDO: Low Dropout Regulator). Vorteilhafterweise sind die Niederspannungsregler ausgebildet, eine konstante Ausgangsspannung bereitzustellen, auch wenn eine Eingangsspannung nur geringfügig größer als die Ausgangsspannung ist. Insbesondere ist vorgesehen, dass alle Sensoren, Transceiver und andere Schaltungen einer die lenksystemanwendungsspezifische integrierte Schaltung aufweisenden Lenksystemsteuerungseinheit über die Niederspannungsregler LDO1 bis LDO-N mit Strom versorgt werden. Interne LDOs der lenksystemanwendungsspezifischen integrierten Schaltung stellen vorteilhafterweise die Stromversorgung der lenksystemanwendungsspezifischen integrierten Schaltung selbst sicher.

Gemäß einer weiteren vorteilhaften Ausgestaltung umfasst die lenksystemanwendungsspezifische integrierte Schaltung eine ASIC-Überwachungssteuerung, die eingerichtet ist, grundlegende Verwaltungs- und Unterstützungsfunktionen für die lenksystemanwendungsspezifische integrierte Schaltung bereitzustellen. Vorteilhafterweise umfassen die Verwaltungs- und Unterstützungsfunktionen eine Überwachung von Niederspannungsreglern und DC-DC-Wandlern, und/oder ein Aktivieren oder Abschalten von Komponenten zur Energieeinsparung, und/oder Schutzfunktionen gegen Über- und Unterspannung, und/oder eine Verwaltung interner Taktsignale und deren Synchronisation. Vorteilhafterweise ist hierdurch die Ausfallsicherheit und die Leistungsfähigkeit der lenksystemanwendungsspezifischen integrierten Schaltung weiter verbessert.

Des Weiteren umfasst die lenksystemanwendungsspezifische integrierte Schaltung vorteilhafterweise eine Strommessschaltung. Diese ist insbesondere dazu eingerichtet, im Betrieb der lenksystemanwendungsspezifischen integrierten Schaltung eine geschlossene Regelung eines Lenksystemmotors mithilfe wenigstens eines weiteren an die lenksystemanwendungsspezifische integrierte Schaltung angeschlossenen Sensors, insbesondere mithilfe eines dem Motor zugeordneten Rotorpositionssensors, zu ermöglichen.

Insbesondere ist vorgesehen, dass die Lenksystemmotor-Steuerung ausgebildet ist, die Leistung des Lenksystemmotors unter Anwendung einer Pulsweitenmodulation (PWM) zu steuern, wobei die Lenksystemmotor-Steuerung vorteilhafterweise an den Ausgangsphasen pulsweitenmodulierte Phasenspannungen zur Ansteuerung des Motors erzeugt. Für das Regeln werden insbesondere Rückführsignale genutzt, darunter insbesondere Spannungssignale, die an elektrischen Messwiderständen (Shunts) zur Erfassung der Phasenströme abfallen, sowie ein analoges Signal eines Rotorpositionssensors. Sowohl die zur Phasenstrommessung dienenden Spannungssignale als auch das Rotorpositionssignal werden vorteilhafterweise über den wenigstens einen AD-Wandler der Lenksystemmotor-Steuerung zugeführt. Das digitalisierte Rotorpositionssignal wird dabei vorteilhafterweise zur Durchführung einer Transformation der Phasenströme in ein für die Regelung verwendetes Koordinatensystem herangezogen.

Eine weitere vorteilhafte Ausgestaltung der lenksystemanwendungsspezifischen integrierten Schaltung sieht vor, dass der Hauptblock als weiteren Funktionsblock einen anwendungsspezifischen Funktionsblock umfasst. Der anwendungsspezifische Funktionsblock ist dabei vorteilhafterweise derart eingerichtet, dass in dem anwendungsspezifischen Funktionsblock anwendungsspezifische Funktionen für ein elektromechanisches Lenksystem implementierbar sind. Gemäß einem weiteren Aspekt werden diese anwendungsspezifischen Funktionen derart verallgemeinert, dass diese auch für andere Motorsteuerungsanwendungen nutzbar sind. Vorteilhafterweise sind weitere für ein Betreiben eines elektromechanischen Lenksystems erforderlichen peripheren Schaltungen ebenfalls in der lenksystemanwendungsspezifischen integrierten Schaltung integriert.

Vorteilhafterweise umfasst die lenksystemanwendungsspezifische integrierte Schaltung zudem eine Bypass-Funktion für einige Sensorsignale, insbesondere für Sensorsignale eines Lenkwinkelsensor und/oder eines Drehmomentsensor. Die lenksystemanwendungsspezifische integrierte Schaltung ist dabei vorteilhafterweise weiter eingerichtet, diese Sensorsignale digital aufzubereiten und zu filtern, und diese für Plausibilitätsprüfungen, Diagnosefunktionen und Initialisierungen zu nutzen und diese zudem einer von einer Lenksystemsteuerungseinheit ebenfalls umfassten Mikrocontrollereinheit zur Verfügung zu stellen. Vorteilhafterweise können die höheren Softwarefunktionen auf diese Informationen zugreifen. Weiter vorteilhaft weist die lenksystemanwendungsspezifische integrierte Schaltung zudem die erforderlichen PHY-Schnittstellen auf, die es vorteilhafterweise ermöglichen, mit diesen Sensorsignalen bei einem Betrieb eines Lenksystems innerhalb der lenksystemanwendungsspezifischen integrierten Schaltung zu interagieren.

Die des Weiteren zur Lösung der eingangs genannten Aufgabe vorgeschlagene Lenksystemsteuerungseinheit für ein elektromechanisches Lenksystem eines Kraftfahrzeugs umfasst eine erfindungsgemäß vorgeschlagene lenksystemanwendungsspezifische integrierte Schaltung. Insbesondere umfasst die Lenksystemsteuerungseinheit eine lenksystemanwendungsspezifische integrierte Schaltung umfassend einen mehrere Funktionsblöcke aufweisenden Hauptblock, wenigstens eine Gate-Treiber-Einheit, insbesondere eine Gate-Treiber-Einheit und eine Relais-Treiber-Einheit, wenigstens eine Schnittstelle und wenigstens einen AD-Wandler. Der Hauptblock umfasst dabei als Funktionsblöcke eine Lenksystemmotor-Steuerung, eine Aktuatormanagement-Einheit, eine Systemdiagnoseeinheit und eine Energiemanagement-Steuerung. Die Lenksystemmotor-Steuerung ist dabei eingerichtet, im Betrieb der lenksystemanwendungsspezifischen integrierten Schaltung den Betrieb eines Lenksystemmotors zu regeln. Weiter vorteilhaft ist die Lenksystemmotor-Steuerung eingerichtet, eine Leistung eines Lenksystemmotors durch Erzeugung von PWM-signalisierter Phasenspannungen zu steuern. Hierzu werden vorteilhafterweise Rückführsignale verwendet, darunter analoge Spannungssignale zur Phasenstrommessung an elektrischen Messwiderständen sowie ein analoges Signal eines Rotorpositionssensors. Sowohl die Phasenstromsignale als auch das Positionssignal werden über einen AD-Wandler der lenksystemanwendungsspezifischen integrierten Schaltung der Lenksystemmotor-Steuerung zugeführt, wobei das digitalisierte Positionssignal vorteilhafterweise zur Transformation in ein vom Regler verwendetes Koordinatensystem herangezogen wird. Die Aktuatormanagement-Einheit ist vorteilhafterweise dazu eingerichtet, im Betrieb der lenksystemanwendungsspezifischen integrierten Schaltung das Lenksystem zu überwachen und ein Abschalten des Lenksystemmotors auszulösen. Die Systemdiagnoseeinheit ist dazu eingerichtet, im Betrieb der lenksystemanwendungsspezifischen integrierten Schaltung die Funktionsfähigkeit der Funktionsblöcke und/oder weiterer Komponenten einer Lenksystemsteuerungseinheit zu überwachen, und die Energiemanagement-Steuerung dazu eingerichtet ist, im Betrieb der lenksystemanwendungsspezifischen integrierten Schaltung geforderte Spannungen in unterschiedlichen Spannungsbereichen bereitzustellen. Die lenksystemanwendungsspezifische integrierte Schaltung der Lenksystemsteuerungseinheit kann dabei insbesondere die obenstehend weiter genannten Merkmale einzeln oder in Kombination aufweisen. Vorteilhafterweise lassen sich so die obenstehend erläuterten Vorteile in Bezug auf die Lenksystemsteuerungseinheit verwirklichen.

Des Weiteren ist insbesondere vorgesehen, dass die Lenksystemsteuerungseinheit eine Mehrzahl von Lenksystemsensoren umfasst, insbesondere wenigstens einen der folgenden Sensoren, insbesondere sämtliche der folgenden Sensoren: einen Rotorpositionssensor; einen elektrischen Messwiderstand, insbesondere einen Shunt; einen Batteriespannungsüberwachungssensor; einen Temperatursensor; einen Drehmomentsensor; einen Lenkwinkelsensor.

Gemäß einer weiteren vorteilhaften Ausgestaltung umfasst die Lenksystemsteuerungseinheit eine Mikrocontrollereinheit, insbesondere eine A-MCU (A-MCU: Application-Microcontroller Unit). Die Mikrocontrollereinheit ist dabei vorteilhafterweise eingerichtet, die für einen Betrieb eines Lenksystems erforderlichen Konfigurationen zu speichern, wobei die Microcontrollereinheit und die lenksystemanwendungsspezifische integrierte Schaltung vorteilhafterweise weiter eingerichtet sind, bei einem Start der Lenksystemsteuerungseinheit miteinander zu kommunizieren und dabei die Konfigurationen von der Mikrocontrollereinheit in die lenksystemanwendungsspezifische integrierte Schaltung zu laden. Auf der Mikrocontrollereinheit können dabei zudem Funktionen der höheren Softwareebene ablaufen.

Eine Ausgestaltungsvariante der Lenksystemsteuerungseinheit sieht vor, dass die Lenksystemsteuerungseinheit eine Speichereinheit umfasst, insbesondere einen Flash-Speicher, weiter insbesondere einen externen Flash-Speicher. Die Speichereinheit ist dabei vorteilhafterweise eingerichtet, die für einen Betrieb eines Lenksystems erforderlichen Konfigurationen zu speichern, wobei die Speichereinheit und die lenksystemanwendungsspezifische integrierte Schaltung vorteilhafterweise weiter eingerichtet sind, bei einem Start der Lenksystemsteuerungseinheit miteinander zu kommunizieren und dabei die Konfigurationen von der Speichereinheit in die lenksystemanwendungsspezifische integrierte Schaltung zu laden. Diese Ausgestaltung ist insbesondere dann vorteilhaft, wenn eine außerhalb der Lenksystemsteuerungseinheit angeordnete externe Mikrocontrollereinheit vorgesehen ist, insbesondere eine einem Aktuator zugeordnete Mikrocontrollereinheit. Das kann beispielsweise der Fall bei einer Implementierung eines intelligenten Aktuators, bei dem die Software auf den Zonenrechner oder Zentralrechner verlagert ist.

Das zur Lösung der eingangs genannten Aufgabe des Weiteren vorgeschlagene elektromechanische Lenksystem für ein Kraftfahrzeug umfasst eine Lenkwelle, über die mittels einer Lenkhandhabe ein Lenkbefehl vorgegeben werden kann, einen Lenksteller mit zumindest einem Elektromotor als Lenksystemmotor, wobei der Lenksteller ausgebildet ist, unter Nutzung des Elektromotors einen Lenkbefehl in eine Lenkbewegung von lenkbaren Rädern eines Kraftfahrzeugs umzusetzen, und eine erfindungsgemäß ausgebildete Lenksystemsteuerungseinheit.

Insbesondere umfasst das elektromechanische Lenksystem eine Lenksystemsteuerungseinheit umfassend eine lenksystemanwendungsspezifische integrierte Schaltung. Die lenksystemanwendungsspezifische integrierte Schaltung umfasst dabei einen mehrere Funktionsblöcke aufweisenden Hauptblock, wenigstens eine Gate-Treiber-Einheit, insbesondere eine Gate-Treiber-Einheit und eine Relais-Treiber-Einheit, und wenigstens eine Schnittstelle, wobei der Hauptblock als Funktionsblöcke eine Lenksystemmotor-Steuerung, eine Aktuatormanagement-Einheit, eine Systemdiagnoseeinheit und eine Energiemanagement-Steuerung umfasst, und wobei die Lenksystemmotor-Steuerung eingerichtet ist, im Betrieb der lenksystemanwendungsspezifischen integrierten Schaltung den Betrieb des Lenksystemmotors zu regeln und insbesondere dessen Leistung durch Erzeugung von pulsweitenmodulierten Phasenspannungen zu steuern.

Wenigstes ein AD-Wandler der lenksystemanwendungsspezifischen integrierten Schaltung ist vorteilhafterweise eingerichtet, im Betrieb der lenksystemanwendungsspezifischen integrierten Schaltung der Lenksystemmotor-Steuerung für die Regelung des Betriebs des Lenksystemmotors digitalisierte Sensorsignale bereitzustellen, wobei zur Regelung insbesondere Rückführsignale verwendet werden. Die Rückführsignale umfassen dabei vorteilhafterweise analoge Spannungssignale, die an dem Elektromotor zugeordneten elektrischen Messwiderständen abfallen und den Phasenströmen entsprechen, und ein analoges Signal eines dem Elektromotor zugeordneten Rotorpositionssensors. Vorteilhafterweise werden die Spannungssignale zur Phasenstrommessung und das Rotorpositionssignal über Eingänge des wenigstens einen AD-Wandlers digitalisiert und der Lenksystemmotor-Steuerung zugeführt. Weiter vorteilhaft wird das digitalisierte Rotorpositionssignal zur Durchführung einer Transformation der Phasenströme in ein vom Regler verwendetes Koordinatensystem verwendet wird.

Die weiter von der lenksystemanwendungsspezifischen integrierten Schaltung umfasste Aktuatormanagement-Einheit ist vorteilhafterweise dazu eingerichtet, im Betrieb der lenksystemanwendungsspezifischen integrierten Schaltung, insbesondere im Betrieb des Lenksystems in einem Kraftfahrzeug, das Lenksystem, insbesondere die korrekte Funktion des Lenksystems, zu überwachen und ein Abschalten des Lenksystemmotors auszulösen. Die zudem von der lenksystemanwendungsspezifischen integrierten Schaltung umfasste Systemdiagnoseeinheit ist dazu eingerichtet, im Betrieb der lenksystemanwendungsspezifischen integrierten Schaltung, insbesondere im Betrieb des Lenksystems in einem Kraftfahrzeug, die Funktionsfähigkeit der Funktionsblöcke und/oder weiterer Komponenten einer Lenksystemsteuerungseinheit zu überwachen, und die Energiemanagement-Steuerung ist dazu eingerichtet, im Betrieb der lenksystemanwendungsspezifischen integrierten Schaltung, insbesondere im Betrieb des Lenksystems in einem Kraftfahrzeug, geforderte Spannungen in unterschiedlichen Spannungsbereichen bereitzustellen. Die lenksystemanwendungsspezifische integrierte Schaltung der Lenksystemsteuerungseinheit kann dabei insbesondere die obenstehend weiter genannten Merkmale einzeln oder in Kombination aufweisen. Vorteilhafterweise lassen sich so die obenstehend für die lenksystemanwendungsspezifische integrierte Schaltung erläuterten Vorteile in Bezug auf das Lenksystem verwirklichen. Insbesondere ist gemäß einer vorteilhaften Ausgestaltungsvariante vorgesehen, dass das elektromechanische Lenksystem als Steer-by-Wire-Lenksystem ausgebildet ist.

Das zur Lösung der eingangs genannten Aufgabe des Weiteren vorgeschlagene Verfahren zum Betreiben einer erfindungsgemäß ausgebildeten lenksystemanwendungsspezifischen integrierten Schaltung in einem Kraftfahrzeug mit einem elektromechanischen Lenksystem, insbesondere in einem Kraftfahrzeug mit einem erfindungsgemäß ausgebildeten elektromechanischen Lenksystem, wobei das Lenksystem einen Lenksystemmotor mit einem zugeordneten Rotorpositionssensor und zugeordneten elektrischen Messwiderständen umfasst, sieht vor, dass die Lenksystemmotor-Steuerung der lenksystemanwendungsspezifischen integrierten Schaltung im Betrieb der lenksystemanwendungsspezifischen integrierten Schaltung den Betrieb des Lenksystemmotors regelt und dessen Leistung durch erzeugte pulsweitenmodulierte Phasenspannungen steuert. Die Lenksystemmotor-Steuerung verwendet zur Regelung des Lenksystemmotors vorteilhafterweise Rückführsignale, wobei die Rückführsignale analoge Spannungssignale, die an den elektrischen Messwiderständen abfallen und den Phasenströmen entsprechen, und ein analoges Signal des Rotorpositionssensors umfassen. Sowohl die Spannungssignale zur Phasenstrommessung als auch das Rotorpositionssignal werden vorteilhafterweise über Eingänge des wenigstens einen AD-Wandlers der lenksystemanwendungsspezifischen integrierten Schaltung digitalisiert und der Lenksystemmotor-Steuerung zugeführt. Zudem wird vorteilhafterweise das digitalisierte Rotorpositionssignal von der Lenksystemmotor-Steuerung zur Durchführung einer Transformation der Phasenströme in eine für die Regelung verwendetes Koordinatensystem verwendet.

Weitere vorteilhafte Einzelheiten, Merkmale und Ausgestaltungsdetails der Erfindung werden im Zusammenhang mit den in den Figuren (nachfolgend Fig.: Figur) dargestellten Ausführungsbeispielen näher erläutert. Dabei zeigt:
- Fig. 1: in einer vereinfachten perspektivischen Darstellung ein Ausführungsbeispiel für ein erfindungsgemäß ausgebildetes elektromechanisches Lenksystem;
- Fig. 2: in einer vereinfachten Blockschaltbilddarstellung ein Ausführungsbeispiel für eine erfindungsgemäß ausgebildete Lenksystemsteuerungseinheit; und
- Fig. 3: in einer weiteren Blockschaltbilddarstellung ein weiteres Ausführungsbeispiel für eine erfindungsgemäß ausgebildete Lenksystemsteuerungseinheit.

In den verschiedenen Figuren sind gleiche Teile in der Regel mit den gleichen Bezugszeichen versehen und werden daher mitunter auch jeweils nur im Zusammenhang mit einer der Figuren erläutert.

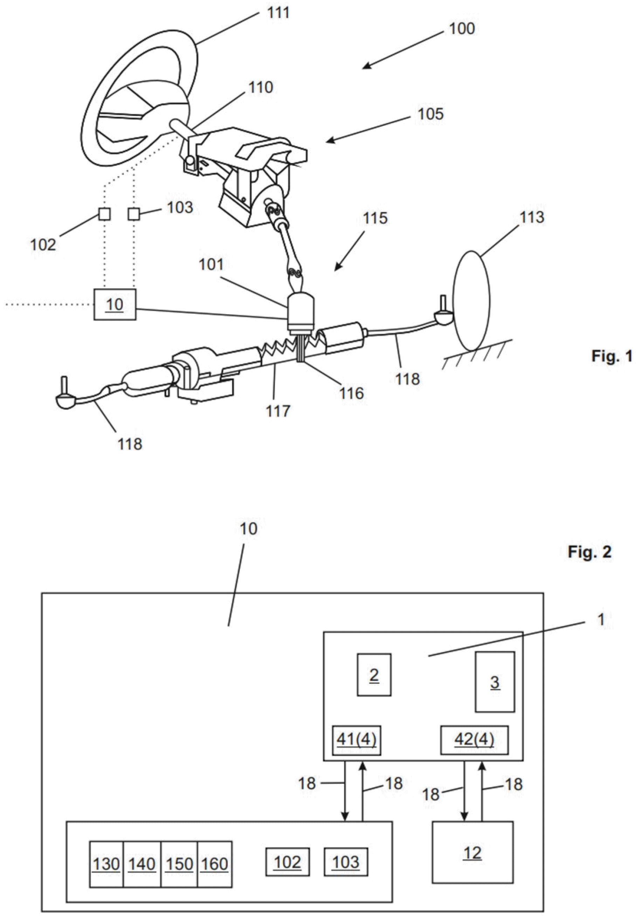

In Fig. 1 ist ein Ausführungsbeispiel für ein erfindungsgemäß ausgebildetes elektromechanisches Lenksystem 100 für ein Kraftfahrzeug, insbesondere für einen Personenkraftwagen, dargestellt, wobei Fig. 1 in einer vereinfachten perspektivischen Darstellung einen Gesamtüberblick über das Lenksystem 100 bietet.

Das Lenksystem 100 umfasst eine Lenksäule 105 mit einer Lenkwelle 110. Die Lenkwelle 110 ist dabei über ein Lenkgetriebe 115 mechanisch mit den lenkbaren Rädern 113 eines Kraftfahrzeugs gekoppelt. Das Lenkgetriebe 115 umfasst in diesem Ausführungsbeispiel ein Ritzel 116, das von einem Lenksystemmotor 101 angetrieben werden kann. Der Lenksystemmotor 101 ist als Elektromotor, insbesondere als dreiphasiger Permanentmagnet-Synchronmotor, ausgebildet. Des Weiteren umfasst das Lenkgetriebe 115 eine Koppelstange 117, die in diesem Ausführungsbeispiel als Zahnstange ausgebildet ist. Das Lenkgetriebe 115 dient dabei zur Übersetzung einer rotatorischen Bewegung des Ritzels 116 in eine translatorische Bewegung der Koppelstange 117 entlang deren Längsachse.

An dem einem Fahrer zugewandten Ende der Lenkwelle 110 ist in diesem Ausführungsbeispiel ein Lenkrad als Lenkhandhabe 111 zur Eingabe eines Lenkbefehls drehfest angeordnet, wobei ein Fahrer die Lenkhandhabe 111 in bekannter Weise zur Eingabe eines Lenkbefehls drehen kann. Die sich entlang ihrer Längsachse linear bewegende Koppelstange 117 ist in diesem Ausführungsbeispiel jeweils zu beiden Kraftfahrzeugseiten mechanisch mit einer Spurstange 118 gekoppelt. Die Spurstangen 118 sind wiederum jeweils mit den lenkbaren Fahrzeugrädern 113 mechanisch gekoppelt. Das Lenkgetriebe 115 ist somit ausgebildet, durch eine entsprechende Ansteuerung des Lenksystemmotors 101 mittels einer dafür vorgesehenen Lenksystemsteuerungseinheit 10 einen sensorisch erfassten Lenkbefehl in eine Lenkbewegung der lenkbaren Räder 113 eines Kraftfahrzeugs umzusetzen. Für das sensorische Erfassen eines Lenkbefehls umfasst das Lenksystem 100 in diesem Ausführungsbeispiel einen Lenkwinkelsensor 102 und einen Drehmomentsensor 103. Die Lenksystemsteuerungseinheit 10 ist dabei insbesondere wie unter Bezugnahme auf die nachfolgenden Ausführungsbeispiele erläutert, ausgebildet.

Abweichend von der Darstellung in Fig. 1 kann das Lenksystem 100 aber insbesondere auch ein Steer-by-Wire-Lenksystem sein, bei dem insbesondere die mechanische Verbindung zwischen Lenkwelle 110 und Zahnstange 117 fehlt.

In Fig. 2 ist in einer Blockschaltbilddarstellung eine Lenksystemsteuerungseinheit 10 für ein elektromechanisches Lenksystem eines Kraftfahrzeugs dargestellt, insbesondere für ein in Fig. 1 dargestelltes Lenksystem 100. Die Lenksystemsteuerungseinheit 10 umfasst dabei in diesem Ausführungsbeispiel eine lenksystemanwendungsspezifische integrierte Schaltung 1, eine Mehrzahl von Sensoreinheiten und eine als A-MCU ausgebildete Mikrocontrollereinheit 12. Bei der lenksystemanwendungsspezifischen integrierten Schaltung 1 handelt es sich um einen ASIC, der zur Ausführung einiger für ein Lenksystem spezifischer Funktionen ausgebildet ist. In diesem Ausführungsbeispiel umfasst die lenksystemanwendungsspezifische integrierte Schaltung 1 einen Hauptblock 2, eine Gate-Treiber-Einheit 3, auch kurz GDU genannt, eine Sensorschnittstelle 41 zum Austausch von Signalen 18 mit den Sensoreinheiten der Lenksystemsteuerungseinheit 10 und eine serielle Peripherieschnittstelle 42 zum Austausch von Signalen 18 mit der Mikrocontrollereinheit 12. In dem Hauptblock 2 werden dabei in diesem Ausführungsbeispiel Funktionen einen niedrigeren Softwareebene ausgeführt, insbesondere plattformbezogene Software. Funktionen einer höheren Softwareebene, insbesondere Funktionen einer Anwendungssoftware, werden in diesem Ausführungsbeispiel von der Mikrocontrollereinheit 12 ausgeführt.

Zu den Funktionsblöcken, die der niedrigeren Softwareebene zugeordnet sind, und die in diesem Ausführungsbeispiel in dem Hauptblock 2 realisiert sind, zählen eine Lenksystemmotor-Steuerung, eine Aktuatormanagement-Einheit, eine Systemdiagnoseeinheit und eine Energiemanagement-Steuerung. Bei einem Betrieb eines Lenksystems 100 in einem Kraftfahrzeug regelt die Lenksystemmotor-Steuerung einen Betrieb eines Lenksystemmotors 101 des Lenksystems 100 und steuert eine Leistung des Lenksystemmotors 101 unter Anwendung einer Pulsweitenmodulation, wobei die entsprechenden Steuerungssignale dabei innerhalb der lenksystemanwendungsspezifischen integrierten Schaltung 1 der GDU 3 bereitgestellt werden, an die dann der Lenksystemmotor über eine entsprechende Wechselrichterschaltung angeschlossen werden kann. Für eine Regelung des Betriebs des Lenksystemmotors 101 werden der Lenksystemmotor-Steuerung von AD-Wandlern 53 der lenksystemanwendungsspezifischen integrierten Schaltung 1 digitalisierte Sensorsignale als Rückführsignale bereitgestellt. Insbesondere Für die Steuerung der Leistung des Elektromotors unter Anwendung einer Pulsweitenmodulation erzeugt die Lenksystemmotor-Steuerung vorteilhafterweise an den Ausgangsphasen PWM-signalisierte Phasenspannungen zur Ansteuerung des Lenksystemmotors. Die für die Regelung benötigten Rückführsignale, darunter Spannungssignale, die an elektrischen Messwiderständen zur Erfassung der Phasenströme abfallen, und ein analoges Signal eines Rotorpositionssensors, werden als analoge Signale an AD-Wandler 53 der lenksystemanwendungsspezifischen integrierten Schaltung 1 angelegt und von diesen AD-Wandlern 53 digitalisiert und der Lenksystemmotor-Steuerung bereitgestellt. Das digitalisierte Rotorpositionssignal wird dabei zur Durchführung einer Transformation der Phasenströme in ein vom Regler der Lenksystemmotor-Steuerung verwendetes Koordinatensystem herangezogen.

In einem Betrieb eines Lenksystems 100 in einem Kraftfahrzeug überwacht die Aktuatormanagement-Einheit die Funktionsfähigkeit des Lenksystems 100 und entscheidet unter Berücksichtigung von Diagnoseergebnissen, ob der Lenksystemmotor 101 abgeschaltet wird. Die Systemdiagnoseeinheit überwacht in dem Betrieb des Lenksystems 100 die Funktionsfähigkeit der in dem Hauptblock 2 implementierten Funktionen sowie die Funktionsfähigkeit der weiteren Komponenten der Lenksystemsteuerungseinheit 10, und die Energiemanagement-Steuerung stellt die für den Betrieb der Lenksystemsteuerungseinheit 10 erforderlichen Spannungen bereit, wobei die erforderlichen Spannungen unterschiedlichen Spannungsbereichen zugeordnet sein können. So arbeiten insbesondere Sensoreinheiten der Lenksystemsteuerungseinheit 10 mit unterschiedlichen Spannungen.

Als Sensoreinheiten sind der Lenksystemsteuerungseinheit 10 in diesem Ausführungsbeispiel ein Rotorpositionssensor 130, mehrere Shunts als elektrische Messwiderstände 140, ein Batteriespannungsüberwachungssensor 150, ein Temperatursensor 160, ein Lenkwinkelsensor 102, insbesondere ein Absolutlenkwinkelsensor, und ein Drehmomentsensor 103 zugeordnet.

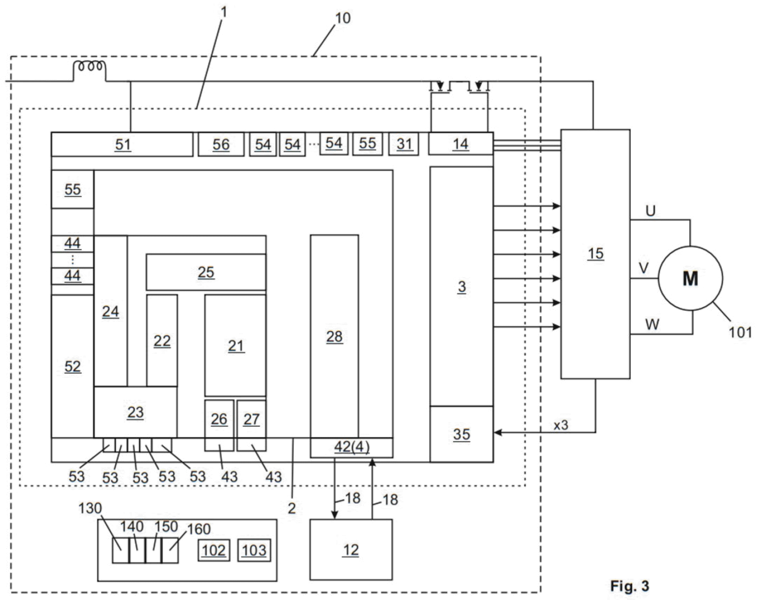

In Fig. 3 ist eine Anordnung aus einem weiteren Ausführungsbeispiel für eine Lenksystemsteuerungseinheit 10 und einem Lenksystemmotor 101 dargestellt. Auch in diesem Ausführungsbeispiel für die Lenksystemsteuerungseinheit 10 sind der Lenksystemsteuerungseinheit 10 eine lenksystemanwendungsspezifische integrierte Schaltung 1, mehrere Sensoreinheiten und eine Mikrocontrollereinheit 12 zugeordnet. Als Sensoreinheiten sind dabei wiederum ein Rotorpositionssensor 130, ein elektrischen Messwiderstand 140, ein Batteriespannungsüberwachungssensor 150, ein Temperatursensor 160, ein Lenkwinkelsensor 102 und ein Drehmomentsensor 103 vorgesehen. In der lenksystemanwendungsspezifischen integrierten Schaltung 1 sind im Vergleich zu dem vorherigen Ausführungsbeispiel allerdings mehr Funktionen implementiert. So weist die in Fig. 3 gezeigte lenksystemanwendungsspezifische integrierte Schaltung 1 zwar ebenfalls einen mehrere Funktionsblöcke aufweisenden Hauptblock 2, eine Gate-Treiber-Einheit 3, mehrere AD-Wandler 53 und mehrere Schnittstellen 4 auf. Dabei umfasst der Hauptblock 2 in diesem Ausführungsbeispiel aber mehr Funktionsblöcke und auch außerhalb des Hauptblocks 2 sind mehr Funktionen durch die lenksystemanwendungsspezifische integrierte Schaltung 1 realisiert.

So umfasst der Hauptblock 2 als Funktionsblöcke eine Lenksystemmotor-Steuerung 21, die zur Regelung eines Betriebs des Lenksystemmotors 101 und zur Steuerung der Leistung des Lenksystemmotors 101 mittels pulsweitenmodulierter Phasenspannungen über die Gate-Treiber-Einheit 3 ausgebildet ist, eine Aktuatormanagement-Einheit 22, die im Betrieb der lenksystemanwendungsspezifischen integrierten Schaltung 1 zur Überwachung des Lenksystems 100 und zur Auslösung einer Abschaltung des Lenksystemmotors 101 im Fehlerfall ausgebildet ist, eine Systemdiagnoseeinheit 23, die zur Überwachung der Funktionsfähigkeit der Funktionsblöcke des Hauptblocks 2 und der Sensoreinheiten des Lenksystems 100 ausgebildet ist, eine Energiemanagement-Steuerung 24, die zur Bereitstellung von innerhalb der Lenksystemsteuerungseinheit 10 geforderter Spannungen in unterschiedlichen Spannungsbereichen ausgebildet ist, einen anwendungsspezifischen Funktionsblock 25, in dem anwendungsspezifische Funktionen für das elektromechanische Lenksystem 100 implementiert sind, eine Zeitmesseinheit 26, die insbesondere einen CRC (CRC: Cyclic Redundancy Check) und einen Vernier-Algorithmus nutzt, und eine Kalibrierungs- und Fehlerkorrektureinheit 27, die insbesondere ausgebildet ist, systematische Verstärkungsfehler oder Offsetfehler zu kompensieren, vorteilhafterweise weiter ausgebildet ist, unter Nutzung einer S-Kurven-Analyse eine Systempräzision zu bewerten und/oder eingehende Messwerte zu überwachen und auftretende Fehler zu diagnostizieren.

Der Hauptblock 2 nutzt dabei in diesem Ausführungsbeispiel eine Prozessorarchitektur, die auf dem RISC-Prinzip basiert, und umfasst einen ARM-Prozessor oder einen RISC-V-Prozessor, oder eine festverdrahtete Logikimplementierung. Zudem umfasst der Hauptblock 2 eine Speichereinheit, die vorzugsweise als statischer Direktzugriffsspeicher (SRAM; SRAM: Static Random Access Memory) ausgebildet ist. In die Speichereinheit 28 können beim Start der Lenksystemsteuerungseinheit 10 Konfigurationen von der Mikrocontrollereinheit 12 über die Schnittstelle 42 geladen werden.

Von AD-Wandlern 53 der lenksystemanwendungsspezifischen integrierten Schaltung 1 werden der Lenksystemmotor-Steuerung 21 im Betrieb der lenksystemanwendungsspezifischen integrierten Schaltung 1 für die Regelung des Lenksystem-Motors 101 Rückführsignale als digitalisierte Sensorsignale bereitzustellen, wobei diese von den Sensoreinheiten, insbesondere von dem Rotorpositionssensor 130 und den Messwiderständen 140, stammen.

Die lenksystemanwendungsspezifische integrierte Schaltung 1 umfasst in diesem Ausführungsbeispiel zudem PHY-Schnittstellen 43 (PHY: Physical Layer Transceiver) für eine Interaktion mit den Sensoreinheiten, und eine Mehrzahl von GPIO-Ports 44.

Des Weiteren umfasst die lenksystemanwendungsspezifische integrierte Schaltung 1 in diesem Ausführungsbeispiel einen DC-DC-Wandler 51, der direkt an eine in Fig. 3 nicht explizit dargestellte Fahrzeugbatterie angeschlossen ist. Über einen weiteren DC-DC-Wandler 56 der lenksystemanwendungsspezifischen integrierten Schaltung 1 wird die Versorgungsspannung für die Mikrocontrollereinheit 12 bereitgestellt.

Weiter weist die lenksystemanwendungsspezifische integrierte Schaltung 1 mehrere Niederspannungsregler 54 (LDOs) auf, wobei die in Fig. 3 dargestellten Pünktchen "···" zwischen den die Niederspannungsregler 54 in Fig. 3 darstellenden Blöcken symbolisieren, dass deutlich mehr als vier Niederspannungsregler vorgesehen sind. Die Niederspannungsregler 54 stellen dabei eine konstante Ausgangsspannung bereit, über die die Komponenten der lenksystemanwendungsspezifischen integrierten Schaltung, insbesondere Sensoren, Transceiver und andere Schaltungen, mit der jeweils erforderlichen Betriebsspannung versorgt werden. Interne Niederspannungsregler 55 der lenksystemanwendungsspezifischen integrierten Schaltung 1 versorgen die lenksystemanwendungsspezifische integrierte Schaltung 1 selbst mit Strom.

Die lenksystemanwendungsspezifische integrierte Schaltung 1 umfasst zudem eine ASIC-Überwachungssteuerung 52. Durch diese ASIC-Überwachungssteuerung 52 werden grundlegende Verwaltungs- und Unterstützungsfunktionen für die lenksystemanwendungsspezifische integrierte Schaltung 1 bereitgestellt. Hierzu zählen insbesondere eine Überwachung der Niederspannungsregler 54 und der DC-DC-Wandler 51, 56; Aktivieren oder Abschalten von Komponenten, um Energie zu sparen; Schutzschaltungen gegen Überspannung und Unterspannung; Verwaltung von internen Taktsignalen und Synchronisation und/oder andere.

In dem in Fig. 3 gezeigten Ausführungsbeispiel ist die Gate-Treiber-Einheit 3 direkt mit einem Stromversorgungsbereich einer Fahrzeugbatterie verbunden. Der Gate-Treiber-Einheit 3 ist dabei eine Ladungspumpe 31 zugeordnet. Außerdem umfasst die lenksystemanwendungsspezifische integrierte Schaltung 1 eine Strommessschaltung 35, mit der eine geschlossene Regelung des Lenksystemmotors 101 mithilfe wenigstens eines weiteren Sensors des Systems, insbesondere mithilfe eines Rotorpositionssensor, weiter insbesondere mithilfe eines Rotorpositionssensor, eines Temperaturmesssensors und eines Strommesssensors, ermöglicht wird. Über die Gate-Treiber-Einheit 3 werden die Steuerungssignale für den Lenksystemmotor 101 dann an eine dem Lenksystemmotor 101 zugeordnete MOSFET-Brückenschaltung 15 übertragen, und der Lenksystemmotor 101 so zur Umsetzung einer Lenkvorgabe angetrieben. Des Weiteren umfasst die lenksystemanwendungsspezifische integrierte Schaltung 1 in diesem Ausführungsbeispiel eine der MOSFET-Brückenschaltung 15 zugeordnete Relais-Treiber-Einheit 14.

Die unter Bezugnahme auf Fig. 3 erläuterte lenksystemanwendungsspezifische integrierte Schaltung 1 wird vorteilhafterweise in einem Kraftfahrzeug mit einem elektromechanischen Lenksystem 100, insbesondere in einem Kraftfahrzeug mit einem elektromechanischen Lenksystem 100 wie vorstehend unter Bezugnahme auf Fig. 1 beschrieben, betrieben. Dem Lenksystemmotor 101 des Lenksystems 100 sind dabei ein Rotorpositionssensor 130 und mehrere elektrische Messwiderstände 140 zugeordnet.

Beim Betrieb der lenksystemanwendungsspezifischen integrierten Schaltung 1 regelt die Lenksystemmotor-Steuerung 21 den Betrieb des Lenksystemmotors 101 und steuert dessen Leistung durch erzeugte pulsweitenmodulierte Phasenspannungen, wobei die Lenksystemmotor-Steuerung 21 zur Regelung des Lenksystemmotors 101 Rückführsignale verwendet. Diese Rückführsignale umfassen in diesem Ausführungsbeispiel analoge Spannungssignale, die an den elektrischen Messwiderständen 140 abfallen und den Phasenströmen entsprechen, und ein analoges Signal des Rotorpositionssensors 130. Sowohl die Spannungssignale zur Phasenstrommessung als auch das Rotorpositionssignal werden Eingängen der AD-Wandler 53 zugeführt, von diesen digitalisiert und dann der Lenksystemmotor-Steuerung 21 als digitalisierte Sensorsignale zugeführt. Das digitalisierte Rotorpositionssignal wird dabei in diesem Ausführungsbeispiel von der Lenksystemmotor-Steuerung 21 zur Durchführung einer Transformation der Phasenströme in eine für die Regelung verwendetes Koordinatensystem verwendet.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: lenksystemanwendungsspezifische integrierte Schaltung
- 2: Hauptblock
- 21: Lenksystemmotor-Steuerung
- 22: Aktuatormanagement-Einheit
- 23: Systemdiagnoseeinheit
- 24: Energiemanagement-Steuerung
- 25: anwendungsspezifischen Funktionsblock
- 26: Zeitmesseinheit
- 27: Kalibrierungs- und Fehlerkorrektureinheit
- 28: Speichereinheit
- 3: Gate-Treiber-Einheit
- 31: Ladungspumpe
- 35: Strommessschaltung
- 4: Schnittstelle
- 41: Sensorschnittstelle
- 42: Peripherieschnittstelle
- 43: PHY-Schnittstelle
- 44: GPIO-Port
- 51: DC-DC-Wandler
- 52: ASIC-Überwachungssteuerung
- 53: AD-Wandler
- 54: Niederspannungsregler
- 55: interner Niederspannungsregler
- 56: DC-DC-Wandler
- 10: Lenksystemsteuerungseinheit
- 12: Mikrocontrollereinheit
- 14: Relais-Treiber-Einheit
- 15: MOSFET-Brückenschaltung
- 18: Signale
- 100: Lenksystem
- 101: Lenksystemmotor
- 102: Lenkwinkelsensor
- 103: Drehmomentsensor
- 105: Lenksäule
- 110: Lenkwelle
- 111: Lenkhandhabe
- 112: Lenksteller
- 113: lenkbares Rad
- 115: Lenkgetriebe
- 116: Ritzel
- 117: Koppelstange
- 118: Spurstange
- 130: Rotorpositionssensor
- 140: elektrischer Messwiderstand
- 150: Batteriespannungsüberwachungssensor
- 160: Temperatursensor

## Patentansprüche

1. Lenksystemanwendungsspezifische integrierte Schaltung (1) umfassend
einen mehrere Funktionsblöcke aufweisenden Hauptblock (2),
wenigstens eine Gate-Treiber-Einheit (3), und
wenigstens eine Schnittstelle (4),
wenigstens einen AD-Wandler (53) mit mehreren Eingängen,
wobei der Hauptblock (2) als Funktionsblöcke eine Lenksystemmotor-Steuerung (21), eine Aktuatormanagement-Einheit (22), eine Systemdiagnoseeinheit (23) und eine Energiemanagement-Steuerung (24) umfasst,
wobei
die Lenksystemmotor-Steuerung (21) eingerichtet ist, im Betrieb der lenksystemanwendungsspezifischen integrierten Schaltung (1) einen Betrieb eines Lenksystemmotors (101) zu regeln,
der wenigstens eine AD-Wandler (53) eingerichtet ist, im Betrieb der lenksystemanwendungsspezifischen integrierten Schaltung (1) der Lenksystemmotor-Steuerung (21) für die Regelung eines Betriebs eines Lenksystemmotors (101) digitalisierte Sensorsignale bereitzustellen,
die Aktuatormanagement-Einheit (22) dazu eingerichtet ist, im Betrieb der lenksystemanwendungsspezifischen integrierten Schaltung (1) ein Lenksystem (100) zu überwachen und ein Abschalten des Lenksystemmotors (101) auszulösen,
die Systemdiagnoseeinheit (23) dazu eingerichtet ist, im Betrieb der lenksystemanwendungsspezifischen integrierten Schaltung (1) die Funktionsfähigkeit der Funktionsblöcke und/oder weiterer Komponenten einer Lenksystemsteuerungseinheit (10) zu überwachen,
und wobei
die Energiemanagement-Steuerung (24) dazu eingerichtet ist, im Betrieb der lenksystemanwendungsspezifischen integrierten Schaltung (1) geforderte Spannungen in unterschiedlichen Spannungsbereichen bereitzustellen.

2. Lenksystemanwendungsspezifische integrierte Schaltung (1) nach Anspruch 1, **dadurch gekennzeichnet, dass** die Lenksystemmotor-Steuerung (21) weiter dazu eingerichtet ist, im Betrieb der lenksystemanwendungsspezifischen integrierten Schaltung (1) eine Leistung eines Lenksystemmotors (101) durch Erzeugung von pulsweitenmodulierten Phasenspannungen zu steuern.

3. Lenksystemanwendungsspezifische integrierte Schaltung (1) nach Anspruch 1 oder Anspruch 2, **dadurch gekennzeichnet, dass** die wenigstens eine Schnittstelle (4) wenigstens eine Sensorschnittstelle (41) umfasst, die dazu eingerichtet ist, Signale von Lenksystem-Sensoren (102, 103) zu empfangen und zur Nutzung durch den Hauptblock bereitzustellen; und/oder **dass** die wenigstens eine Schnittstelle (4) eine Peripherieschnittstelle (42) zum Austausch von Signalen (5) mit einer Mikrocontrollereinheit (12) umfasst.

4. Lenksystemanwendungsspezifische integrierte Schaltung (1) nach einem der vorstehenden Ansprüche, **gekennzeichnet durch** einen DC-DC-Wandler (51), der insbesondere eingerichtet ist, ein Lenksystem (100) aus einem 12V- oder 48V-Energieversorgungsbereich zu speisen; und/oder eine Prozessorarchitektur, die auf dem RISC-Prinzip basiert, wobei die Prozessorarchitektur insbesondere einen ARM-Prozessor oder eine Risk-V-Prozessor umfasst.

5. Lenksystemanwendungsspezifische integrierte Schaltung (1) nach einem der vorstehenden Ansprüche, **dadurch gekennzeichnet, dass** die Gate-Treiber-Einheit (3) ausgebildet ist, direkt mit einem Stromversorgungsbereich einer Fahrzeugbatterie verbunden zu werden.

6. Lenksystemanwendungsspezifische integrierte Schaltung (1) nach einem der vorstehenden Ansprüche, **gekennzeichnet durch** eine Mehrzahl von Niederspannungsreglern (54).

7. Lenksystemanwendungsspezifische integrierte Schaltung (1) nach einem der vorstehenden Ansprüche, **gekennzeichnet durch** eine ASIC-Überwachungssteuerung (52), die eingerichtet ist, grundlegende Verwaltungs- und Unterstützungsfunktionen für die lenksystemanwendungsspezifische integrierte Schaltung (1) bereitzustellen,
wobei die Verwaltungs- und Unterstützungsfunktionen insbesondere eine Überwachung von Niederspannungsreglern (54) und DC-DC-Wandlern (51, 56),
ein Aktivieren oder Abschalten von Komponenten zur Energieeinsparung, Schutzfunktionen gegen Über- und Unterspannung und/oder
eine Verwaltung interner Taktsignale und deren Synchronisation umfassen.

8. Lenksystemanwendungsspezifische integrierte Schaltung (1) nach einem der vorstehenden Ansprüche, **gekennzeichnet durch** eine Strommessschaltung (35), die dazu eingerichtet ist, im Betrieb der lenksystemanwendungsspezifischen integrierten Schaltung (1) eine geschlossene Regelung eines Lenksystemmotors (101) mithilfe wenigstens eines weiteren an die lenksystemanwendungsspezifischer integrierte Schaltung angeschlossenen Sensors zu ermöglichen.

9. Lenksystemanwendungsspezifische integrierte Schaltung (1) nach einem der vorstehenden Ansprüche, **dadurch gekennzeichnet, dass** der Hauptblock (2) als weiteren Funktionsblock einen anwendungsspezifischen Funktionsblock (25) umfasst, wobei der anwendungsspezifische Funktionsblock (25) derart eingerichtet ist, dass in diesem anwendungsspezifische Funktionen für ein elektromechanisches Lenksystem (100) implementierbar sind.

10. Lenksystemanwendungsspezifische integrierte Schaltung (1) nach einem der vorstehenden Ansprüche, **gekennzeichnet durch** eine Bypass-Funktion für einige Sensorsignale, insbesondere Sensorsignale eines Lenkwinkelsensor (SAS) und/oder Drehmomentsensor (TS), wobei die lenksystemanwendungsspezifische integrierte Schaltung (1) weiter eingerichtet ist, diese Sensorsignale digital aufzubereiten und zu filtern, und diese für Plausibilitätsprüfungen, Diagnosefunktionen und Initialisierungen zu nutzen und/oder einer Mikrocontrollereinheit (12) zur Verfügung zu stellen.

11. Lenksystemsteuerungseinheit (10) für ein elektromechanisches Lenksystem (100) eines Kraftfahrzeugs mit einer anwendungsspezifischen integrierten Schaltung, **dadurch gekennzeichnet, dass** die anwendungsspezifische integrierte Schaltung eine lenksystemanwendungsspezifische integrierte Schaltung (1) gemäß einem der vorstehenden Ansprüche ist.

12. Lenksystemsteuerungseinheit (10) nach Anspruch 11, **dadurch gekennzeichnet, dass** die Lenksystemsteuerungseinheit eine Mikrocontrollereinheit (12) umfasst, wobei die Mikrocontrollereinheit (12) eingerichtet ist, die für einen Betrieb eines Lenksystems (100) erforderlichen Konfigurationen zu speichern, wobei die Microcontrollereinheit (12) und die lenksystemanwendungsspezifische integrierte Schaltung (1) weiter eingerichtet sind, bei einem Start der Lenksystemsteuerungseinheit (12) miteinander zu kommunizieren und dabei die Konfigurationen von der Mikrocontrollereinheit (12) in die lenksystemanwendungsspezifische integrierte Schaltung (1) zu laden.

13. Lenksystemsteuerungseinheit (10) nach Anspruch 11, **dadurch gekennzeichnet, dass** die Lenksystemsteuerungseinheit (10) eine Speichereinheit umfasst, wobei die Speichereinheit eingerichtet ist, die für einen Betrieb eines Lenksystems (100) erforderlichen Konfigurationen zu speichern, wobei die Speichereinheit und die lenksystemanwendungsspezifische integrierte Schaltung (1) weiter eingerichtet sind, bei einem Start der Lenksystemsteuerungseinheit (10) miteinander zu kommunizieren und dabei die Konfigurationen von der Speichereinheit in die lenksystemanwendungsspezifische integrierte Schaltung (1) zu laden.

14. Elektromechanisches Lenksystem (100) für ein Kraftfahrzeug umfassend eine Lenkwelle (110), über die mittels einer Lenkhandhabe (111) ein Lenkbefehl vorgegeben werden kann, einen Lenksteller (112) mit zumindest einem Elektromotor als Lenksystemmotor (101), wobei der Lenksteller (112) ausgebildet ist, unter Nutzung des Elektromotors einen Lenkbefehl in eine Lenkbewegung von lenkbaren Rädern (113) eines Kraftfahrzeugs umzusetzen, und eine Lenksystemsteuerungseinheit (10), **dadurch gekennzeichnet, dass** die Lenksystemsteuerungseinheit (10) nach einem der Ansprüche 11 bis 13 ausgebildet ist.

15. Verfahren zum Betreiben einer lenksystemanwendungsspezifischen integrierten Schaltung (1) nach einem der Ansprüche 1 bis 11 in einem Kraftfahrzeug mit einem elektromechanischen Lenksystem (100), insbesondere in einem Kraftfahrzeug mit einem elektromechanischen Lenksystem (100) nach Anspruch 14, wobei das Lenksystem (100) einen Lenksystemmotor (101) mit einem zugeordneten Rotorpositionssensor (130) und zugeordneten elektrischen Messwiderständen (140) umfasst,
wobei
die Lenksystemmotor-Steuerung (21) im Betrieb der lenksystemanwendungsspezifischen integrierten Schaltung (1) den Betrieb des Lenksystemmotors (101) regelt und dessen Leistung durch erzeugte pulsweitenmodulierte Phasenspannungen steuert,
die Lenksystemmotor-Steuerung (21) zur Regelung des Lenksystemmotors (101) Rückführsignale verwendet,
wobei die Rückführsignale analoge Spannungssignale, die an den elektrischen Messwiderständen (140) abfallen und den Phasenströmen entsprechen, und ein analoges Signal des Rotorpositionssensors (130) umfassen,
wobei sowohl die Spannungssignale zur Phasenstrommessung als auch das Rotorpositionssignal über Eingänge des wenigstens einen AD-Wandlers (53) der lenksystemanwendungsspezifischen integrierten Schaltung (1) digitalisiert und der Lenksystemmotor-Steuerung (21) zugeführt werden,
wobei das digitalisierte Rotorpositionssignal von der Lenksystemmotor-Steuerung (21) zur Durchführung einer Transformation der Phasenströme in eine für die Regelung verwendetes Koordinatensystem verwendet wird.
